# EUROPEAN PATENT APPLICATION

(11) **EP 4 379 210 A1**
(43) Date of publication of application: **05.06.2024**
(21) Application number: 23210811.8
(22) Date of filing: 20.11.2023
(51) Int. Cl.: F04B 49/06, F04B 53/22, F16M 11/04, F16M 11/10, F16M 13/02, F04D 13/06

(54) **SUPPORT AND ORIENTATION DEVICE**

(30) Priority: 01.12.2022 IT 202200024816
(71) Applicant: Dab Pumps S.p.A., 35035 Mestrino (Padova) (IT)
(72) Inventor: TAZIOLI, Stefano, 35035 MESTRINO (PD) (IT); VOLPI, Aleandro, 35035 MESTRINO (PD) (IT)
(74) Representative: De Filippis, Sara

(57) **Abstract**

The invention concerns a support and orientation device (10) adapted to be mounted on a pump (30) and removably support an electronic apparatus (20) relative to said pump (30).

Advantageously, this device comprises:
- a first and a second bracket (100) adapted to be placed at two opposite sides of said pump (30);
- two pins (12; 120), one for each first and second bracket (100), adapted to be fixed at two opposite sides of said pump (30) and removably inserted into a respective slot (14), forming the rotation fulcrum of said first and second bracket (100) relative to said pump (30).

## Description

The present invention refers generically to a support and orientation device.

More in detail, the present invention refers to a device for supporting and orientating electronic apparatuses which is adapted to be mounted on pumps, for example of electromechanical type.

To date, electromechanical pumps comprise electronic devices, in particular inverters with integral user interfaces, mounted in a fixed manner and therefore they cannot be oriented relative to their initial positioning.

One of the issues leading to the adoption of fixed configurations today is that electronic devices have multiple connection cables whose management could pose problems, for example with any movements that might be carried out if the system were not fixed.

Furthermore, to date, the pumps are mounted and configured or programmed in locations that are not always easily and conveniently reachable. By way of example, these could be very narrow assembly stations and therefore with minimal manoeuvring area or very high areas, not allowing the user to interact comfortably with them, regardless of their position.

In particular, it is easy to understand how, through the fixed configurations of the known art, it is possibly complex to read a possible display of the electronic apparatus fixed to the pump, for example, when the pump itself is two meters high, and the display is oriented upward.

A further issue of the known art systems is that, since the electronic devices are fixed to the pump, they must be ad hoc for that specific type of pump, for example due to the overall dimensions/size thereof, not allowing actually a universal construction, which then could be used regardless of the type of pump.

The aim of the present invention is to realize a support and orientation device that overcomes the issues of the known art.

Another aim of the present invention is to realize a support and orientation device that allows the cables of electronic devices to be optimally managed, guaranteeing, in parallel, a plurality of inclinations and therefore possible configurations thereof.

A further aim of the present invention is to realize a universal support and orientation device that can be mounted on any type of pump.

Not the least aim of the present invention is to provide a support and orientation device that facilitates the use of this type of pump-electronic apparatus systems.

These and other aims are achieved by a support and orientation device, according to claim 1 attached herein; other detailed technical features of the support and orientation device, object of the invention, are reported in the subsequent dependent claims.

The object is therefore a support and orientation device adapted to be mounted on a pump and removably support an electronic apparatus relative to the pump itself.

The invention comprises:
- a first bracket with a first end and a second end, the first end being adapted to be placed at a first side of the pump and being equipped with at least one slot;
- a base for supporting the electronic apparatus at the second end of the bracket;
- a first pin adapted to be fixed at the first side of said pump and removably inserted into the slot of the first bracket, forming the rotation fulcrum of said first bracket relative to said pump.

According to the invention, a second pin and a second bracket, which is substantially identical to the first bracket and equipped with at least one slot, can be comprised; both would be adapted to be placed at a second side of the pump opposite to the first side.

The fact that the support device comprises only one or two brackets, designed to be fixed at one end to the sides of the pump and at the opposite end to receive the electronic apparatus on a base, allows for the adaption of the support's dimensions to those of the pump, making the element, object of the invention, universally applicable.

Preferably, according to the invention, the first and/or the second pin can comprise a threaded fastening device and a head, wherein the fastening device at a first end thereof is adapted to be fixed in the sides of the pump and, at a second end, is adapted to support the head.

Furthermore, according to the invention, the first and/or second pin on the side facing the pump can comprise an angular positioning guide device with snap rotation having a substantially polygonal shape into which the fastening device is inserted from the side facing the pump.

Again, according to the invention, this angular positioning guide device can have an octagonal shape to allow said brackets to be inclined at angles of 45° relative to the pump.

Furthermore, according to the invention, it is possible to provide, between the pump and the angular positioning guide device, a perforated compensator device concentric relative to the angular positioning device, adapted to structurally realize a threading of the pump.

Again, according to the invention, it is possible to provide an anti-thrust safety device between the angular positioning guide device and the head.

Advantageously, according to the invention, it is possible to comprise a band foldable on itself, comprising the first and/or the second pin, and adapted to be positioned around the first and/or the second side of the pump, so as to adapt to its dimensions and shape.

In this case, equally advantageously, the first and/or the second pin can comprise an internal inlet facing, when in use, the pump, so as to receive the band and hold it in place.

It is an object of the invention also a pump, in particular an electronic pump, comprising such a support and orientation device.

Further aims and advantages of the present invention will be clearer from the following description, relating to a merely exemplifying and preferred, but not limiting, embodiment of a support and orientation device, according to the present invention, and from the attached figures, in which:

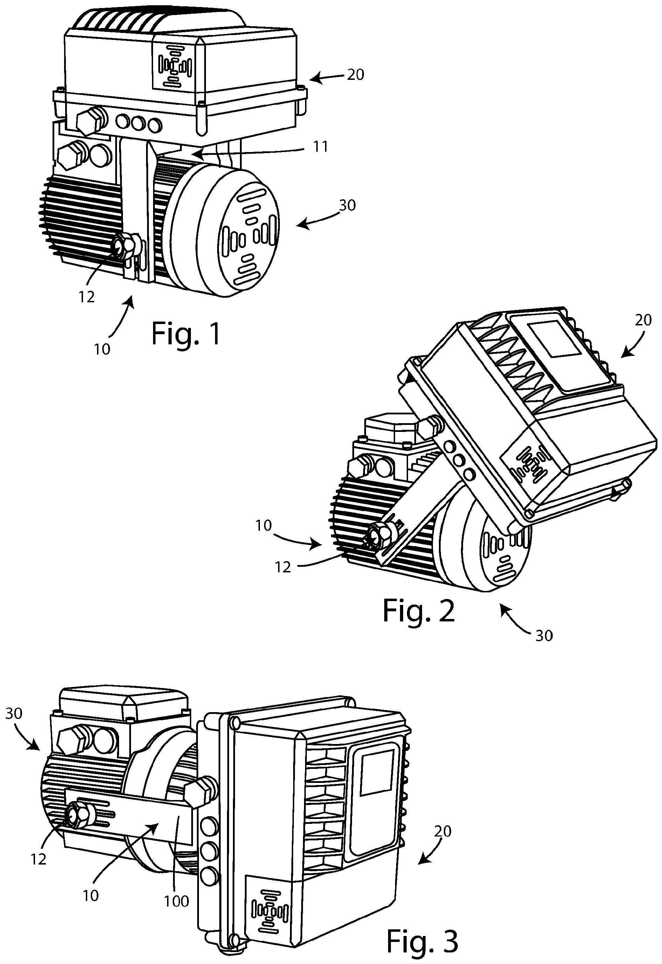

- Figure 1 is a perspective view of the support and orientation device in a first inclination configuration;
- Figures 2 and 3 are respective perspective views of the device of Figure 1, where two further inclination configurations are visible;
- Figure 4A is a perspective and half exploded view of a first embodiment, according to a first variant, of a pin of the device according to the present invention, where it is also visible the detail of the assembly of one of the two brackets on the base of the electronic apparatus, according to the present invention;
- Figures 4B and 4C are two detail views of the exploded view of Figure 4A;
- Figure 5 shows an exploded perspective view of a second variant of the pin of the device according to the present invention;
- Figures 6A and 6B are two side views of the device of Figure 1, where possible height configurations of the device, according to the invention, are visible;
- Figure 7 shows a second embodiment of the device of Figure 1, according to the present invention;
- Figures 8A and 8B show two views, respectively the rear one and the front one, of the detail of the pin of the embodiment of Figure 6;

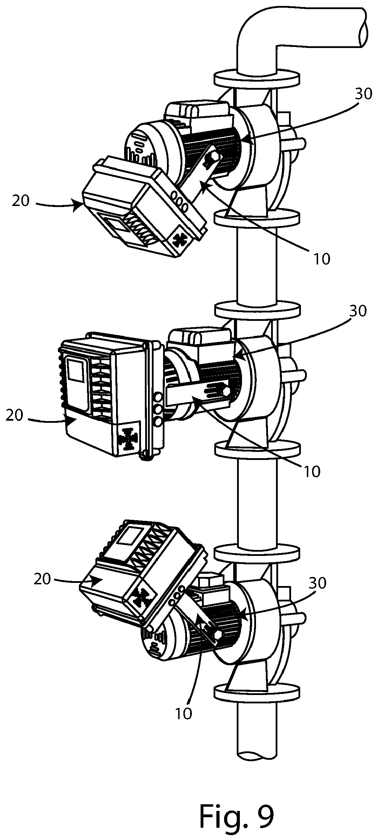

- Figure 9 is a schematic figure relating to possible examples of the positioning and inclination of the device of Figure 1;
- Figures 10A and 10B are two perspective views of a third embodiment of the device of Figure 1, according to the invention;
- Figure 11 shows the fastening method of the embodiment of Figures 10A and 10B;
- Figures 12A and 12B are two further views, a frontal one and a perspective one, of the embodiment of Figures 10A and 10B.

With reference to the above-mentioned figures, the support and orientation device is indicated with the numerical reference 10.

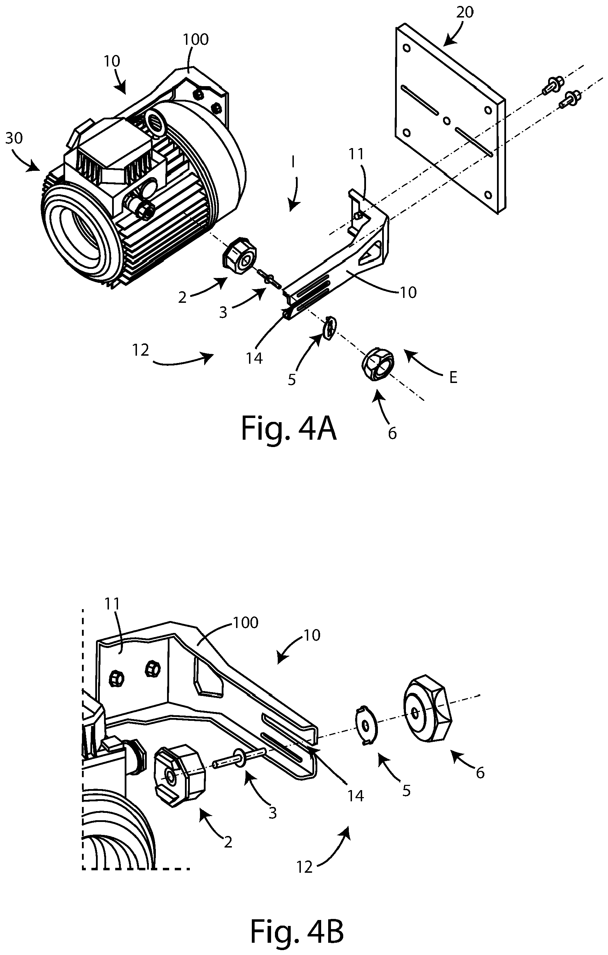

In particular, this device 10 comprises a first and a second bracket 100, each having a substantially "L" shape and having at its free end, coinciding with the base of the letter "L", a base or support 11. Advantageously, each support 11 is adapted to removably support an electronic apparatus 20 relative to the pump 30 on which it must be arranged. Only by way of example, the support 11 can comprise a plurality of holes into which respective fastening means are inserted (Figs. 4A-4C), such as screws, which are inserted into abutments located in correspondence with the base of the electronic apparatus 20, so as to fix it to the support 11.

According to the preferred form of the invention shown in the attached figures, the two brackets 100 are separated to advantageously increase the compatibility of the device 10 with pumps 30 of different dimensions. Of course, it is possible to make the two brackets in one piece, having an overall "U" shape.

Advantageously, through a device 10 comprising two brackets 100 it is possible, regardless of the diameter of the pump 30, to configure the device 10; in fact, if the brackets were a single piece having a substantially upside-down "U" shape, the size of the U, or the distance between one arm and the other, would be fixed and could not be modified both in the case of a pump 30 having larger dimensions of this distance, as well as of smaller dimensions, thus limiting the application of the device to a certain size, or requiring the production of a wide range of sizes to be adapted to the various pumps, with obvious consequences in warehouse management.

Advantageously, in a first embodiment, the support and orientation device 10 comprises two pins 12 adapted to be fixed at the two opposite sides of the aforementioned pump 30 on which the device 10 is mounted.

More in detail, preferably the two pins 12 are provided on the pump 30, for the assembly of the device 10.

Advantageously, each pin 12 comprises a fastening device 3, preferably having an elongated shape and threaded on both ends, and a head 6.

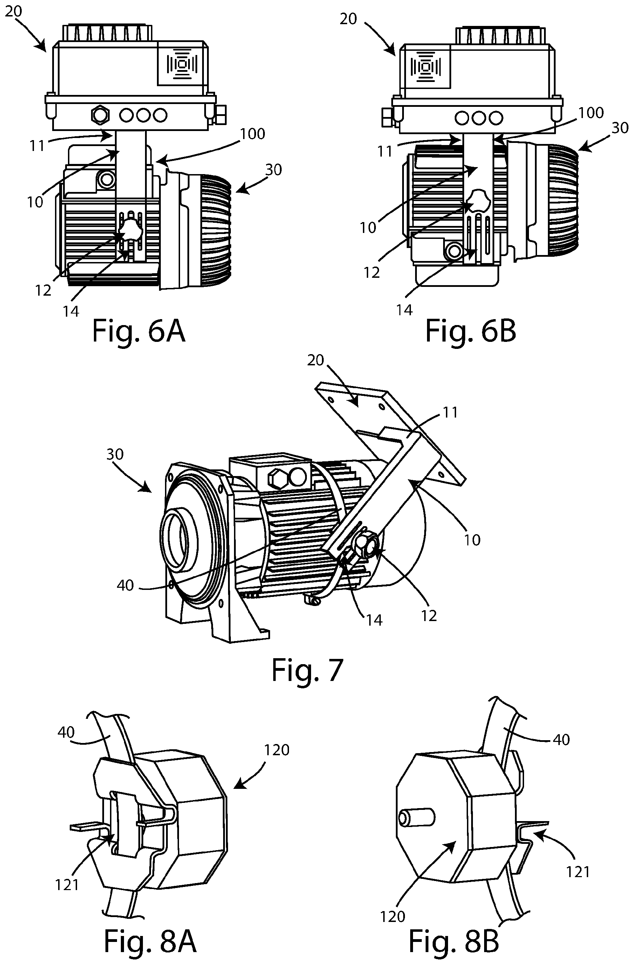

In a second embodiment, visible in Figures 7, 8A and 8B, the two pins 120 are opposed on two sides of a substantially circular band 40, having a variable length, adapted to be positioned around the body of the pump 30. In particular, this band 40 can be configured depending on the size of the pump 30 on which the device 10 must be positioned, fixing its ends in such a way as to vary the final diameter of the band itself, so that the device is universal.

More in detail, in this second embodiment, the pin 120 comprises an internal slot 121 facing, when in use, the pump 30, to receive the band 40 and let it pass through while at the same time holding it in place.

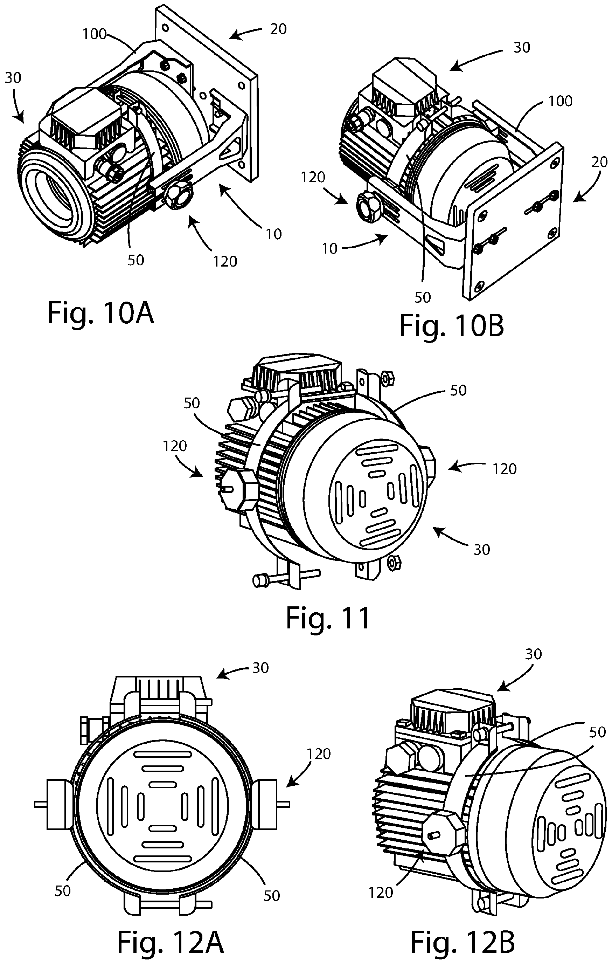

In a third embodiment, visible in Figures 10A-10B, 11 and 12A-12B, the pins 120 are opposed to two substantially semicircular crescents 50, having a variable length, adapted to be positioned and fixed around the body of the pump 30. In particular, these crescents 50 are configurable depending on the size of the pump 30 on which the device 10 must be positioned.

More in detail, to fix the device 10 to the pump 30, the two crescents 50 comprise, at their ends, holes adapted to house fastening elements capable of fixing the two crescents 50 on any type of pump 30, of any size, thus making the device universal.

Advantageously, the crescents 50 comprise two separate bands, adaptable through the force exerted by these fastening elements to different diameters, so that they can be applied to different pumps 30 having different dimensions.

Advantageously, in this third embodiment, it is possible to adopt the pin 120 shown in Figures 8A and 8B.

Advantageously, regardless of the embodiment in question, the pins 12 and 120 are adapted to be the rotation fulcrum of the brackets 100 relative to the pump 30.

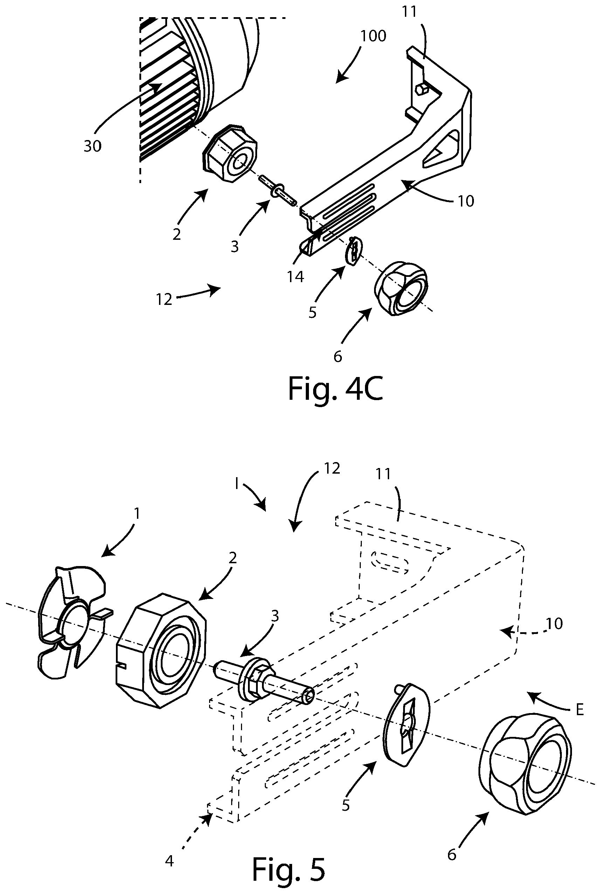

Advantageously, as can be seen in particular in Figures 4A, 4B and 4C, each bracket 100, on the side opposite to the base 11, comprises at least one slot 14 passing through each side, adapted to receive each respective pin 12 or 120.

Preferably, the slots 14 also have an open profile, for example on the end of the bracket 100.

More specifically, in this open configuration, each slot 14 has the triple function of:
1. allowing the bracket 100 to be quick inserted onto the respective pin 12 or 120, to removably attach the device 10 to the pump 30. In particular, the two pins 12 or 120 are fixed on the body of the pump 30 and the respective slots 14 (one for each bracket 100) receive from their opening the pin 12 or 120 below the head 6. In other words, the slot 14 slides relative to the body of the pin 12 or 120, the head 6 of the pin 12 or 120 is located above the slot 14.
2. allowing the height of the support 11 to be varied relative to the pump 30 (Figs. 5A and 5B), by sliding each bracket 100 along the slot 14 relative to the corresponding pin 12 or 120 and locking it in a specific point of the length of the slot 14, so that the electronic apparatus 20 can be positioned more or less far from the pump 30;
3. allowing the inclination of the device 10 to be varied relative to the pump 30, as will be better explained below.

Furthermore, each bracket 100 can have multiple slots 14 side by side, to make the device 10 even more adaptable to the different shapes of the pumps to which the device itself is to be applied.

More in detail, as visible for example in Figures 4A and 5, each bracket 100 structurally identifies two areas, an internal area I which goes from the bracket 100 to the pump 30 and an external area E which goes from the opposite side of the bracket 100, outwards.

Advantageously, in its first embodiment, each pin 12 can be manufactured according to two variants. In particular, in both variants of the first embodiment the pin 12 comprises a series of perforated and concentric elements, pivoted together via the fastening device 3 of the pin 12.

In the first variant of the pin 12 visible in figures 4A-4C, the pumps 30 of the various possible models are moulded in such a way as to provide a standardized type of threading, in this way the compensator device and the angular guide device (visible separately in the Figure 5 and indicated respectively with references 1 and 2) coincide in a single piece 2 adaptable to the aforementioned threading (Figures 4A-4C).

In the second variant of the first embodiment of the pin 12, as visible in Figure 5, inside the internal area I, in correspondence with the pump 30, each pin 12 comprises a compensator and anti-rotation device 1 adapted to allow an angular positioning guide device 2 to be positioned in correspondence with the pump 30, actually creating a threading and making the system universal and therefore adaptable to any type of pump 30.

Advantageously, in all variants, the angular positioning guide device 2 has an octagonal section, adapted to allow the device 10 to be inclined according to different angles. In particular, the device 2 acts as a guide for the bracket 100, which has lateral edges corresponding to the edges of the device 2 itself. In this way, the bracket 100 can be extracted and reinserted by sliding its edges on a pair of sides opposite to each other of the octagon of the device 2 and, since the geometry of the device 2 is indeed octagonal, the device 10 can assume four different positions, each distant from the previous one by 45°. In further embodiments, it is possible to change the geometry of the device 2 to change the resulting inclination angle.

Furthermore, adjacent to the angular positioning guide device 2 and passing through the slot 14 when in use, there is the fastening device 3 which is inserted in correspondence with the internal area I in the compensator device 1 and in the angular guide device 2 or, in the second variant, in the angular guide device 2.

In correspondence with the external area E, the fastening device 3, in all variants, threads into an anti-thrust safety device 5 and into an adjacent head of the pin 6.

From the description made, the features of the support and orientation device, which is the object of the present invention, are clear, as well as its advantages are clear.

Finally, it is clear that numerous other variations can be made to the system in question, without departing from the principles of novelty inherent in the inventive idea, just as it is clear that, in practice, the implementation of the invention, the materials, the shapes and dimensions of the illustrated details may be extremely variable depending on the needs and they may be replaced with other equivalent ones.

## Claims

1. A support and orientation device (10) adapted to be mounted on a pump (30) and removably support an electronic apparatus (20) relative to said pump (30),
**characterized in that** it comprises:
- a first bracket (100) with a first end and a second end, the first end being adapted to be placed at a first side of said pump (30) and being equipped with at least one slot (14);
- a base (11) for supporting said electronic apparatus (20) at the second end of the bracket (100);
- a first pin (12; 120) adapted to be removably inserted into the slot (14) of the first bracket, forming the rotation fulcrum of said first bracket (100) relative to said pump (30).

2. The support and orientation device (10) according to claim 1, **characterized in that** it comprises
- a second bracket (100) with a first end and a second end, the first end being adapted to be placed at a second side of said pump (30) opposite to said first side, and being equipped with at least one slot (14);
- a second pin (12; 120) adapted to be removably inserted into the slot (14) of the second bracket (100), forming the rotation fulcrum of said second bracket (100) relative to said pump (30).

3. The support and orientation device (10) according to claim 1 or 2, **characterized in that** the first and/or the second pin (12) are adapted to be fixed at respectively the first and/or the second side of the pump.

4. The support and orientation device (10) according to one of claims 1-3, **characterized in that** the first and/or the second pin (12) comprise a threaded fastening device (3) and a head (6), wherein said fastening device (3) at a first end thereof is adapted to be fixed in said first and/or second side of said pump (30) and, at a second end, is adapted to support said head (6).

5. The support and orientation device (10) according to claim 4, **characterized in that** the first and/or the second pin (12) on the side of said pump (30) comprises an angular positioning guide device (2) having a substantially polygonal shape on the edges of which the arms of the brackets (100) can be placed and slide to position them at different angles relative to said pump (30).

6. The support and orientation device (10) according to claim 5, **characterized in that** said fastening device (3) is inserted in said angular positioning guide device (2).

7. The support and orientation device (10) according to one of the claims 5-6, **characterized in that** it comprises, between said pump (30) and said angular positioning guide device (2), a perforated compensator device (1) concentric to said angular positioning device (2), being adapted to structurally realize a threading of said pump (30).

8. The support and orientation device (10) according to one of the claims 5-7, **characterized in that** it comprises, between said angular positioning guide device (2) and said head (6), an anti-thrust safety device (5).

9. The support and orientation device (10) according to one of the claims 1-3, **characterized in that** it comprises a first band (40, 50) comprising said first and/or second pin (120) and adapted to be placed around the first and/or the second side of said pump (30).

10. The support and orientation device (10) according to claim 9, **characterized in that** it comprises a second band (50) adapted to be fixed together with the first band (50) on said pump (30), said first and second band (50) comprising respectively said first and second pin (120) and being adapted to be placed respectively around the first and/or the second side of said pump (30).

11. The support and orientation device (10) according to claim 10, **characterized in that** the first and/or the second pin (120) comprises an internal inlet (121) facing, when in use, the side of said pump (30), so as to receive the band (40) and hold it in place.

12. A pump (30) **characterized in that** it comprises a support and orientation device (10) according to one of the claims 1-8.
